# EUROPÄISCHE PATENTSCHRIFT

(11) **EP 2 888 151 B1**
(45) Veröffentlichungstag und Bekanntmachung des Hinweises auf die Patenterteilung: **26.04.2017**
(21) Anmeldenummer: 13732966.0
(22) Anmeldetag: 02.07.2013
(51) Int. Cl.: B62D 21/11, B62D 29/00

(54) **ACHSTRÄGER FÜR EIN KRAFTFAHRZEUG**
AXLE CARRIER FOR A MOTOR VEHICLE
SUPPORT D'ESSIEU POUR VÉHICULE À MOTEUR

(30) Priorität: 24.08.2012 DE 102012215099
(43) Veröffentlichungstag der Anmeldung: 01.07.2015
(73) Patentinhaber: Bayerische Motoren Werke Aktiengesellschaft, 80809 München (DE)
(72) Erfinder: KELLER, David, 80638 München (DE); LOTZ, Markus, 82054 Sauerlach (DE); ZANDER, Jörg, CH-8645 Jona (CH)
(86) Internationale Anmeldenummer: PCT/EP2013/063936
(87) Internationale Veröffentlichungsnummer: WO 2014/029540

(56) Entgegenhaltungen:
- EP-A2- 1 712 451
- DE-A1-102006 013 554
- DE-A1-102008 006 006

## Beschreibung

Vorliegende Erfindung betrifft einen Achsträger für ein Kraftfahrzeug gemäß dem Oberbegriff des Anspruchs 1.
Die DE 10 2008 006 006 A1 zeigt einen beispielhaften Achsträger gemäß dem Oberbegriff des Anspruchs 1. Der vorbekannte Achsträger zeigt zwei Längsträger, die über einen Querträger miteinander verbunden sind. Zum Versteifen der Konstruktion ist ein plattenförmiges Schubfeld angeordnet. Weiterhin bekannt ist aus der DE 10 2006 013 554 A1, dass ein solches Schubfeld eine einen Hohlraum begrenzende Versteifungsrippe aufweisen kann. Dabei ist bei diesem bekannten Stand der Technik die aus einem Metallwerkstoff bestehende hohle Versteifungsrippe in das durch ein Kunststoffspritzverfahren gefertigte Schubfeld integriert, d.h. mit diesem umspritzt. Es ist Aufgabe vorliegender Erfindung, einen Achsträger für ein Kraftfahrzeug anzugeben, der bei kostengünstiger Herstellung und Montage möglichst leichtbauend ist. Ferner soll der Achsträger in der Serienfertigung herstellbar sein und eine wartungsarme und betriebssichere Funktion eines Kraftfahrzeugs ermöglichen.
Die Lösung der Aufgabe erfolgt durch die Merkmale des Anspruchs 1. Die Unteransprüche haben bevorzugte Weiterbildungen der Erfindung zum Inhalt. Somit wird die Aufgabe gelöst durch einen Achsträger mit einem ersten Längsträger und einem zweiten Längsträger und zumindest einem die beiden Längsträger verbindenden Querträger. Besonders vorzugsweise sind zwei parallele Querträger vorgesehen. Zur Versteifung der Konstruktion sind die Längsträger über ein Schubfeld aus faserverstärktem Kunststoff verbunden. Die Verwendung des faserverstärkten Kunststoffes, insbesondere eines kohlefaserverstärkten Kunststoffes (CFK), ermöglicht die Leichtbauweise des Achsträgers. Um eine ausreichende Steifigkeit zu erhalten, ist erfindungsgemäß eine Versteifungsrippe auf das Schubfeld aufgesetzt. Zwischen der Versteifungsrippe und dem Schubfeld ist ein Hohlraum ausgebildet, so dass bei möglichst geringem Gewicht eine bestmögliche Steifigkeit erhalten wird.

Der erfindungsgemäße Achsträger ist insbesondere als Hinterachsträger ausgebildet. Für eine weitere Gewichtseinsparung werden vorzugsweise die Querträger ebenfalls aus faserverstärktem Kunststoff gefertigt. Für die beiden Längsträger wird vorzugsweise Aluminiumguss verwendet.

Erfindungsgemäß ist vorgesehen, dass die Versteifungsrippe ebenfalls aus faserverstärktem Kunststoff besteht, wobei die Versteifungsrippe auf das Schubfeld aufgeklebt ist. Um eine ausreichend große Fläche zum Verkleben des Schubfeldes mit der Versteifungsrippe vorzusehen, ist die Versteifungsrippe "hutförmig" ausgebildet. Diese Hutform ist gebildet durch einen den Hohlraum bildenden Bestandteil und durch eine umlaufende Krempe. Die Krempe stellt dabei eine zum Schubfeld parallele Fläche dar, so dass über die Krempe die Versteifungsrippe mit dem Schubfeld verklebt werden kann.

Das Schubfeld ist in seiner einfachsten Ausführung ein plattenförmiges Element aus faserverstärktem Kunststoff. Für weitere Gewichtseinsparungen kann das Schubfeld mittels Ausschnitten auch in Form eines Rahmens oder andersartigem Strebentragwerkes ausgebildet werden.

Die Versteifungsrippe erstreckt sich bevorzugt parallel zu einem Querträger. Insbesondere bei Verwendung von faserverstärktem Kunststoff für die Querträger ist es von Vorteil, über das Schubfeld einen zweiten Kraftpfad zwischen den Längsträgern bereitzustellen. Um diesen Kraftpfad steif genug auszubilden, wird die Versteifungsrippe parallel zum Querträger angeordnet.

Des Weiteren ist bevorzugt vorgesehen, dass im Hohlraum zumindest stellenweise ein Abstand zwischen dem Schubfeld und der Versteifungsrippe von mindestens 20 mm, vorzugsweise mindestens 30 mm, vorgesehen ist.

Insbesondere ist der größte Abstand im Bereich der Anbindung an die Längsträger vorgesehen.

Die Versteifungsrippe verläuft bevorzugt vom ersten Längsträger zum zweiten Längsträger. Besonders bevorzugt ist die Versteifungsrippe im Bereich des Hohlraums mit beiden Längsträgern verbunden, vorzugsweise verschraubt. Das Verbindungselement, beispielsweise die Schraube, verläuft also durch den Hohlraum hindurch.

Als Abstandshalter zwischen dem Schubfeld und der Versteifungsrippe wird bevorzugt eine Hülse durch den Hohlraum hindurch angeordnet. Die Verschraubung mit dem Längsträger wird besonders bevorzugt in dieser Hülse angeordnet.

Die verwendeten Hülsen für die Verschraubung des Schubfeldes und/oder der Versteifungsrippe sind besonders bevorzugt aus Kunststoff gefertigt. Dadurch wird ein direkter Kontakt zwischen dem faserverstärkten Kunststoff und dem Aluminiumguss vermieden, so dass keine Korrosion an den Kontaktstellen auftritt.

Weitere Einzelheiten, Merkmale und Vorteile der Erfindung ergeben sich aus der nachfolgenden Beschreibung und den Figuren. Es zeigen:
- Figur 1: eine isometrische Ansicht eines erfindungsgemäßen Achsträgers gemäß einem Ausführungsbeispiel,
- Figur 2: ein Detail des erfindungsgemäßen Achsträgers gemäß dem Ausführungsbeispiel in Explosionsdarstellung,
- Figur 3: einen ersten Detailschnitt des erfindungsgemäßen Achsträgers gemäß dem Ausführungsbeispiel, und
- Figur 4: einen zweiten Detailschnitt des erfindungsgemäßen Achsträgers gemäß dem Ausführungsbeispiel.

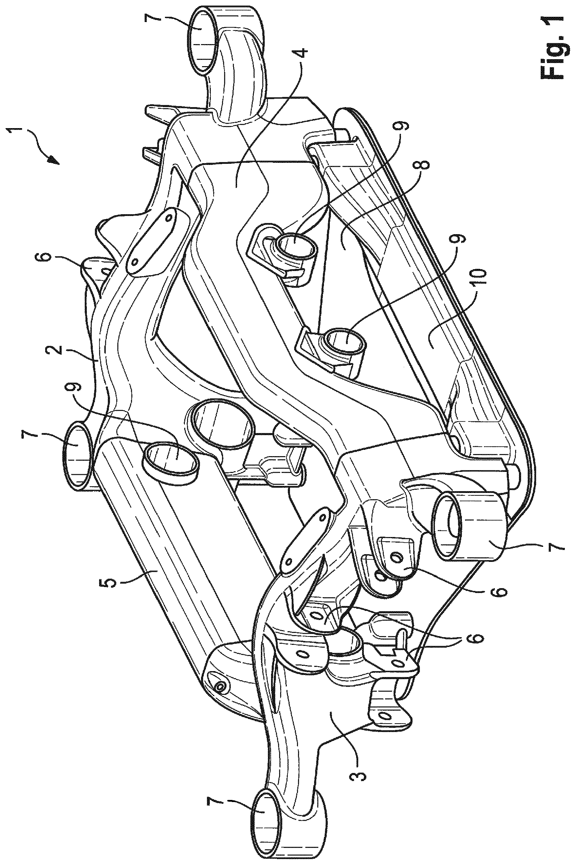

Im Folgenden wird ein Ausführungsbeispiel eines Achsträgers 1 anhand der Figuren 1 bis 4 im Detail erläutert.

Der Achsträger 1 umfasst zwei sich in Fahrzeuglängsrichtung erstreckende Längsträger 2, 3. Ein erster Längsträger 2 ist bezüglich des Fahrzeugs links angeordnet. Ein zweiter Längsträger 3 ist bezüglich des Fahrzeugs rechts angeordnet. Die beiden Längsträger 2, 3 sind über einen vorderen Querträger 4 und einen hinteren Querträger 5 miteinander verbunden.

An den Längsträgern 2, 3 sind mehrere Anbindungsstellen 6 zum Befestigen von Lenkern ausgebildet. Über die Lenker werden die Räder mit dem Achsträger 1 verbunden. Des Weiteren sind am Achsträger 1 Aufnahmen 7 für Lager vorgesehen. Über diese Lager wird der Achsträger 1 mit einer Fahrzeugkarosserie verbunden. Der Achsträger 1 ist insbesondere als Hinterachsträger 1 ausgebildet.

Die beiden Längsträger 2, 3 sind des Weiteren über ein Schubfeld 8 miteinander verbunden. Sowohl das Schubfeld 8 als auch die beiden Querträger 4, 5 sind aus faserverstärktem Kunststoff gefertigt. Die beiden Längsträger 2, 3 bestehen aus Aluminiumguss.

In bzw. an den Querträgern 4, 5 sind Lagerböcke 9 zur Anbindung eines Hinterachsgetriebes vorgesehen.

Auf dem Schubfeld 8, insbesondere zwischen dem vorderen Querträger 4 und dem Schubfeld 8, ist eine Versteifungsrippe 10 aufgesetzt.

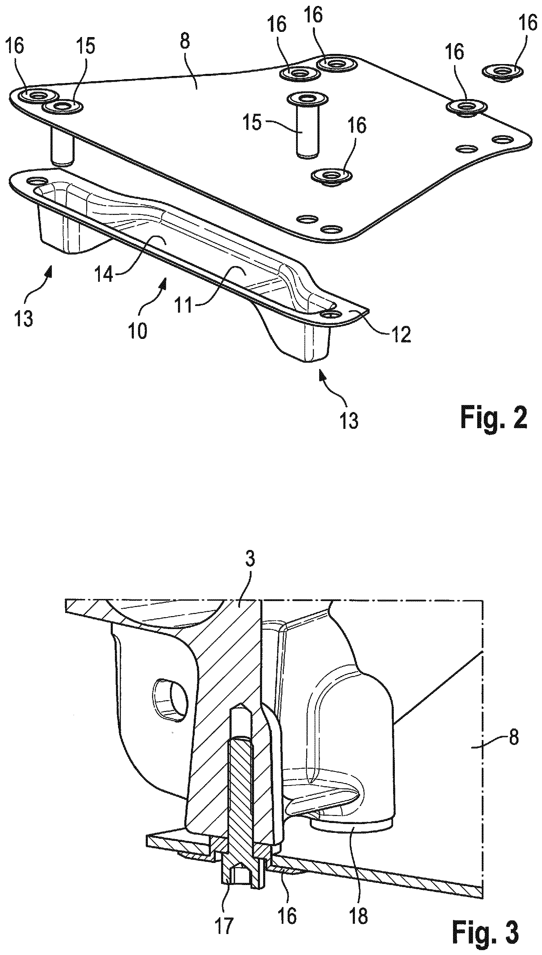

Figur 2 zeigt im Detail das Schubfeld 8 und die Versteifungsrippe 10 in einer Explosionsdarstellung. Dabei ist zu sehen, dass die Versteifungsrippe 10 hutförmig ausgebildet ist. Diese Hutform ist gekennzeichnet durch einen Hohlraum 11 und eine um den Hohlraum 11 umlaufende Krempe 12. Die Krempe 12 stellt eine zum Schubfeld 8 parallele Fläche dar, so dass über die Krempe 12 die Versteifungsrippe 10 mit dem Schubfeld 8 verklebt werden kann. Der Hohlraum 11 ist im Bereich der beiden Längsträger 2, 3 relativ groß ausgebildet, so dass sich hier Erhebungen 13 ergeben. Zwischen diesen beiden Erhebungen 13 ist der Hohlraum 11 zu einer Absenkung 14 hin verkleinert ausgebildet.

Figur 2 zeigt des Weiteren vier hintere Verschraubungsstellen, an denen das Schubfeld 8 mit den Längsträgern 2, 3 verschraubt wird. Im vorderen Bereich gibt es ebenfalls vier Verschraubungsstellen zur Verschraubung des Schubfeldes 8 und der Versteifungsrippe 10 mit den Längsträgern 2, 3. Für diese Verschraubungen sind erste Hülsen 15 und zweite Hülsen 16 vorgesehen. Die Hülsen 15, 16 sind aus Kunststoff gefertigt und vermeiden somit einen direkten Kontakt zwischen dem Aluminiumguss der Längsträger 2, 3 und dem faserverstärkten Kunststoff des Schubfeldes 8 bzw. der Versteifungsrippe 10.

Figur 3 zeigt im Detail die Verbindung zwischen dem Schubfeld 8 und einem der Längsträger 3 im hinteren Bereich. Über die zweite Hülse 16 und eine Schraube 17 ist das Schubfeld 8 von unten an den Längsträger 3 geschraubt. Die Kraftübertragung vom Längsträger 3 auf das Schubfeld 8 erfolgt über einen im Längsträger 3 ausgebildeten Anschlag 18.

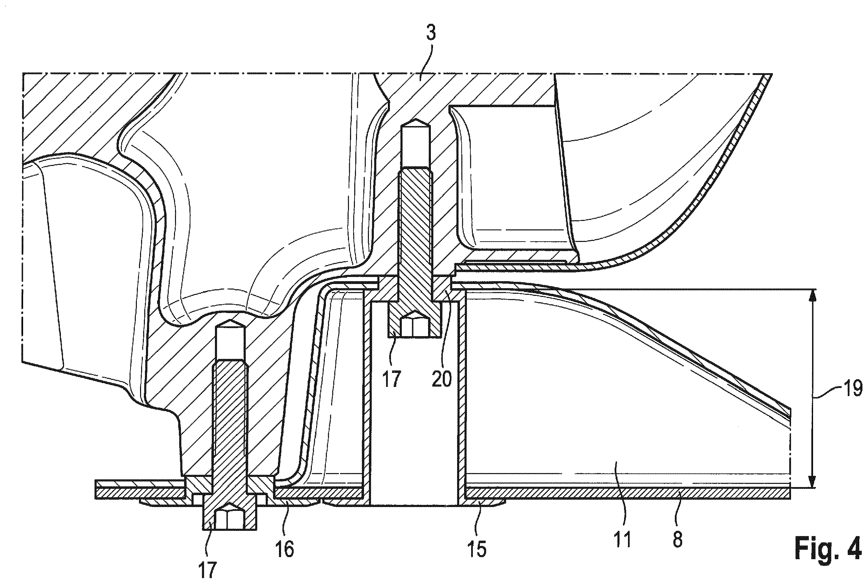

Figur 4 zeigt die Anbindung des Schubfeldes 8 und der Versteifungsrippe 10 im vorderen Bereich. Eine Schraube 17 in Kombination mit einer zweiten Hülse 16 verbindet das Schubfeld 8 zusammen mit der Krempe 12 der Versteifungsrippe 10 mit dem Längsträger 3. Durch den Hohlraum hindurch ist eine der ersten Hülsen 15 eingesetzt. Die erste Hülse 15 dient somit auch zur Abstandserhaltung zwischen der Versteifungsrippe 10 und dem Schubfeld 8. Ein Hülsenboden 20 der ersten Hülse 15 liegt innenseitig im Hohlraum 11 an der Versteifungsrippe 10 an. Der Schraubenkopf der Schraube 17 drückt über den Hülsenboden 20 die Versteifungsrippe 10 in Richtung des Längsträgers 3. Durch entsprechende Ausbildung der ersten Hülse 14 wird wiederum ein direkter Kontakt des faserverstärkten Kunststoffs mit dem Aluminium vermieden.

Figur 4 zeigt des Weiteren einen Abstand 19 im Hohlraum 11 zwischen dem Schubfeld 8 und der Versteifungsrippe 10. Dieser Abstand 19 ist im Bereich der Erhebung 13 eingezeichnet. Der Abstand 19 beträgt zumindest stellenweise mindestens 20 mm, vorzugsweise mindestens 30 mm, um eine ausreichende Steifigkeit zu gewährleisten.

### Bezugszeichenliste:

- 1: Achsträger
- 2: Erster Längsträger (linker Längsträger)
- 3: Zweiter Längsträger (rechter Längsträger)
- 4: Vorderer Querträger
- 5: Hinterer Querträger
- 6: Anbindungsstellen
- 7: Aufnahmen
- 8: Schubfeld
- 9: Lagerböcke
- 10: Versteifungsrippe
- 11: Hohlraum
- 12: Krempe
- 13: Erhebung
- 14: Absenkung
- 15: Erste Hülse
- 16: Zweite Hülse
- 17: Schraube
- 18: Anschlag
- 19: Abstand
- 20: Hülsenboden

## Patentansprüche

1. Achsträger (1) für ein Kraftfahrzeug, umfassend einen ersten Längsträger (2), einen zweiten Längsträger (3), zumindest einen die beiden Längsträger verbindenden Querträger (4, 5), sowie ein mit dem ersten und zweiten Längsträger (2, 3) verbundenes Schubfeld (8) aus faserverstärktem Kunststoff, wobei mindestens eine Versteifungsrippe (10) auf das Schubfeld (8) aufgesetzt ist, und wobei zwischen der Versteifungsrippe (10) und dem Schubfeld (8) ein Hohlraum (11) ausgebildet ist, **dadurch gekennzeichnet, dass** die Versteifungsrippe (10) aus faserverstärktem Kunststoff besteht und mit einer um den Hohlraum (11) umlaufenden Krempe (12), weiche eine zum Schubfeld (8) parallele Fläche darstellt, auf das Schubfeld (8) aufgeklebt ist.

2. Achsträger nach Anspruch 1, wobei die Versteifungsrippe (10) parallel zum Querträger (4, 5) angeordnet ist.

3. Achsträger nach einem der vorhergehenden Ansprüche, wobei im Hohlraum (11) zumindest stellenweise ein Abstand (19) zwischen dem Schubfeld (8) und der Versteifungsrippe (10) von mindestens 20 mm, vorzugsweise mindestens 30 mm, ausgebildet ist.

4. Achsträger nach einem der vorhergehenden Ansprüche, wobei die Versteifungsrippe (10) vom ersten Längsträger (2) zum zweiten Längsträger (3) verläuft und im Bereich des Hohlraums (11) mit beiden Längsträgern (2, 3) verschraubt ist.

5. Achsträger nach einem der vorhergehenden Ansprüche, **gekennzeichnet durch** eine sich **durch** den Hohlraum (11) erstreckende Hülse (15) als Abstandshalter zwischen dem Schubfeld (8) und der Versteifungsrippe (10).

6. Achsträger nach Anspruch 9, **dadurch gekennzeichnet, dass** eine Schraube (17) zum Verbinden der Versteifungsrippe (10) mit einem der Längsträger (2, 3) in die Hülse (15) eingesetzt ist.

## Claims

1. An axle support (1) for a motor vehicle, comprising a first longitudinal member (2), a second longitudinal member (3), at least one cross member (4, 5) connecting the two longitudinal members, and also a shear field (8) which is connected to the first and second longitudinal members (2, 3) and comprises fibre-reinforced plastics, wherein at least one reinforcing rib (10) is positioned on the shear field (8), and wherein a cavity (11) is formed between the reinforcing rib (10) and the shear field (8), **characterised in that** the reinforcing rib (10) comprises fibre-reinforced plastics and is adhesively bonded onto the shear field (8) with a flange (12) which runs around the cavity (11) and forms a surface parallel to the shear field (8).

2. An axle support according to claim 1, wherein the reinforcing rib (10) is arranged parallel to the cross member (4, 5).

3. An axle support according to any of the preceding claims, wherein a distance (19) between the shear field (8) and the reinforcing rib (10) of at least 20 mm, preferably at least 30 mm is formed at least in some places in the cavity (11).

4. An axle support according to any of the preceding claims, wherein the reinforcing rib (10) extends from the first longitudinal member (2) to the second longitudinal member (3), and is screwed together with the two longitudinal members (2, 3) in the region of the cavity (11).

5. An axle support according to any of the preceding claims, **characterised by** a bushing (15), extending through the cavity (11) as a spacer between the shear field (8) and the reinforcing rib (10).

6. An axle support according to claim 9, **characterised in that** a screw (17) for connecting the reinforcing rib (10) to one of the longitudinal members (2, 3) is introduced into the bushing (15).

## Revendications

1. Support d'essieu (1) destiné à un véhicule comprenant un premier longeron (2), un second longeron (3), au moins une traverse (4, 5) reliant les deux longerons ainsi qu'un panneau de poussée (8) en un matériau synthétique renforcé par des fibres relié au premier et au second longerons (2, 3), au moins une nervure de renfort (10) étant positionnée sur le panneau de poussée (8) et une cavité (11) étant formée entre la nervure de renfort (10) et le panneau de poussée (8),
**caractérisé en ce que**
la nervure de renfort (10) est réalisée en un matériau synthétique renforcé par des fibres et est collée sur le panneau de poussée (8) par un rebord (12) entourant la cavité (11) qui définit une surface parallèle au panneau de poussée (8).

2. Support d'essieu conforme à la revendication 1,
dans lequel la nervure de renfort (10) est parallèle à la traverse (4, 5).

3. Support d'essieu conforme à l'une des revendications précédentes, dans lequel, dans la cavité (11) est formée, au moins par endroits, une distance (19) entre le panneau de poussée (8) et la nervure de renfort (10) d'au moins 20 mm et de préférence d'au moins 30 mm.

4. Support d'essieu conforme à l'une des revendications précédentes, dans lequel la rainure de renfort (10) s'étend du premier longeron (2) au second longeron (3) et est vissé aux deux longerons (2, 3) dans la zone de la cavité (11).

5. Support d'essieu conforme à l'une des revendications précédentes,
**caractérisé par**
un manchon (15) faisant office d'élément d'écartement s'étendant au travers de la cavité (11) entre le panneau de poussée (8) et la nervure de renfort (10).

6. Support d'essieu conforme à la revendication 9,
**caractérisé en ce qu'**
une vis (17) permettant de relier la nervure de renfort (10) à l'un des longerons (2, 3) est insérée dans le manchon (15).
